# EUROPEAN PATENT SPECIFICATION

(11) **EP 3 068 952 B1**
(45) Date of publication and mention of the grant of the patent: **01.04.2020**
(21) Application number: 14861545.3
(22) Date of filing: 11.11.2014
(51) Int. Cl.: E04B 1/26, E04B 1/48, F16B 12/24

(54) **JOINING ELEMENT AND METHOD OF JOINING WOOD STRUCTURES**
VERBINDUNGSELEMENT UND VERFAHREN ZUM VERBINDEN VON HOLZSTRUKTUREN
ÉLÉMENT DE LIAISON ET PROCÉDÉ DE LIAISON DE STRUCTURES DE BOIS

(30) Priority: 14.11.2013 FI 20136116
(43) Date of publication of application: 21.09.2016
(73) Proprietor: Venona Ari Kähkönen, 07900 Loviisa (FI)
(72) Inventor: KÄHKÖNEN, Ari, FI-07900 Loviisa (FI)
(74) Representative: Kolster Oy Ab
(86) International application number: PCT/FI2014/050849
(87) International publication number: WO 2015/071539

(56) References cited:
- EP-A1- 1 630 427
- WO-A2-98/52728
- WO-A2-98/52728
- CH-A- 339 735
- DE-U1- 8 631 926
- DE-U1- 8 631 926
- JP-A- H1 136 447
- JP-A- H1 136 447
- SU-A1- 1 165 755
- US-A- 4 870 797
- US-A1- 2003 016 992

## Description

### Background

The invention relates to wood structures, and particularly to a joining element and a method of joining wood structures.

In log construction and in wood construction, it is typical to use various metal plates, such as perforated metal plates, angle irons or the like, fastened to the outer surface of a wood surface in order to join log and/or wood structures. Such solutions are problematic not only because of the appearance of the joint but often also because of the weakness thereof.

In glued beam construction, when forming so-called beam frame solutions, again, the pieces of the frame are usually joined by notching. However, the process of notching is laborious and expensive, and usually has to be carried out in an industrial environment since, typically, notching requires large machine tools unavailable at ordinary construction sites.

A further solution in connection with furniture structures in particular is known wherein wood or fibre plates are joined to one another by cutting a dimensionally accurate groove in both pieces to be joined and by fitting in the groove a connecting block to join the pieces to one another by means of either glue or form locking. However, as far as heavier and more demanding tasks, such as house building, are concerned, such solutions are not capable of providing a sufficiently strong joint; furthermore, special tools are required for forming the grooves required by such a connecting block. WO9852728 discloses a plate-joinery system including a chain-saw plate joiner, where the cutting mechanism includes a cutting-chain driven about a saw-bar. The cutting mechanism of the chain-saw plate joiner may be advanced on rails to one of a set of predermined depths. The increased recess depth allowed by the chain-saw and the resultant increase in both glueable surface area and mechanical engagement permit high-strength right-angle joints to be made with the speed of conventional plate-joinery. Plate-joints of more conventional proportion may also be made. The plate joinery system also includes specialty plate configurations and compatible fasteners that permit many joints to be rapidly assembled without resort to either manual glue application or external clamps. A series of high-precision, low-friction cutting devices suitable for general introduction is also described.

### Brief description of the invention

An object of the invention is thus to provide a novel joining element and method of joining wood structures. The object of the invention is achieved by a joining element and a method which are characterized by what is stated in the independent claims. Preferred embodiments of the invention are disclosed in the dependent claims.

The solution is based on joining wood structures to one another by employing a joining element arrangeable in a groove provided in the pieces to be joined. The groove and the joining element are formed so as to enable both glue and pin joints to be used in the joint.

An advantage of the joining element and method according to the solution is that it enables a joint to be formed which enables large wood parts to be joined quickly to one another and which is strong and immediately sufficiently stiff so as to allow installation work to be continued. The strength and firmness of the joint are also enhanced by forming the joint from a plurality of support points between the joining element and the joint groove provided in the materials to be joined. A further advantage is that the groove may be formed in the pieces to be joined at the site of use.

### Brief description of the figures

The invention is now described in closer detail in connection with preferred embodiments and with reference to the accompanying drawings, in which:
Figures 1a, 1b, and 1c schematically show some wood structure joints;
Figure 2 shows a method of joining wood structures;
Figures 3a and 3b show a joining element for joining wood structures to one another;
Figures 4a, 4b, and 4c schematically show a wood structure joint; and
Figures 5a and 5b schematically show some other wood structure joints.

### Detailed description

The figures are schematic and only intended to illustrate the solution and some of its embodiments. For the sake of clarity, only some of mutually similar features of the solution are numbered in the figures.

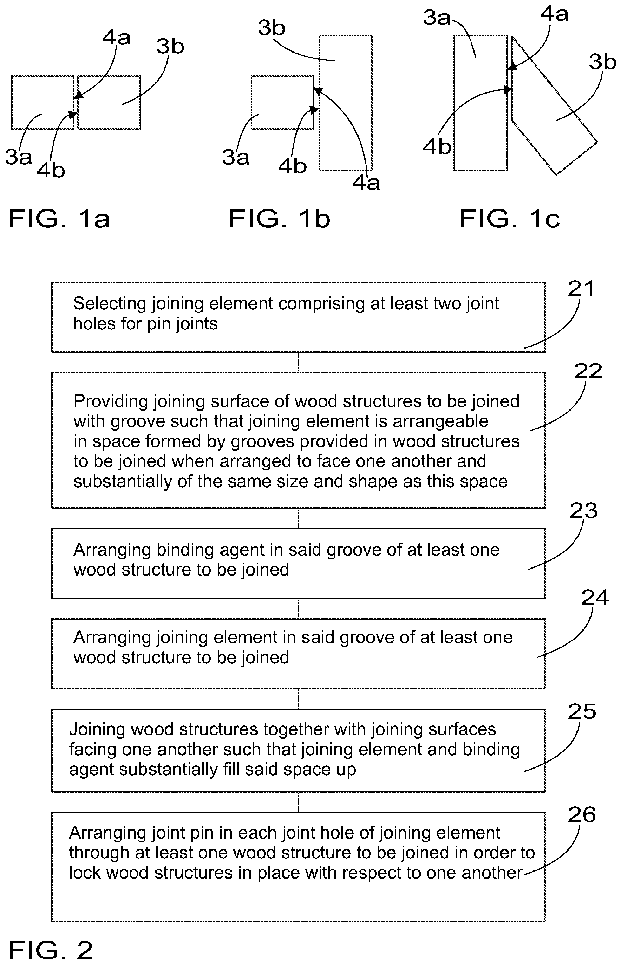

Figures 1a, 1b, and 1c schematically show some wood structure joints. In these wood structure joints, two wood structures 3a, 3b are joined to one another such that joining surfaces 4a, 4b of the wood structures are arranged to face one another. Figures 1a to 1c show only some examples of joining wood structures, and in different embodiments more than two wood structures may be joined to one another, the wood structures may join to one another at any side thereof, and they may be arranged at any angle with respect to one another. For the sake of clarity, the wood structures 3a, 3b are arranged at a small distance from one another in the figures.

Figure 2 shows a method of joining wood structures. The method comprises selecting 21 a joining element 1 comprising at least two joint holes 2 for pin joints. Preferably, the joining element 1 may further comprise a first plane surface 7a and a second plane surface 7b and an inclined surface 9a, 9b slanting towards an outer edge 8 of the joining element and arranged at an angle with respect to at least one plane surface 7a, 7b, the joining element 1 being at least at one of its outer edges 8 or in one area of its outer edge in a direction of the joint holes 2 more tapered than in an area of a middle part of the joining element. The direction of the joint holes 2 refers to a direction of the longitudinal axes of the joint holes 2. Preferably, the joining element 1 may thus be more tapered at least at one of its outer edges 8 or in one area of the outer edge in the area of the middle part of the joining element. In an embodiment, the joining element 1 may be in accordance with any other joining element disclosed in this description. In yet another embodiment, the present method of joining wood structures may also employ a joining element 1 of another kind suitable for the method.

The joining surface 4a, 4b of each wood structure 3a, 3b to be joined is provided 22 with a groove 5a, 5b such that the joining element 1 is arrangeable in a space formed by the grooves provided in the wood structures to be joined in between the wood structures when the wood structures are placed against one another with the joining surfaces of the wood structures facing one another. The shape of the space is substantially congruent, i.e. of the same size and shape as the joining element.

Further, the method of Figure 2 comprises arranging 23 a binding agent in the groove 5a, 5b of at least one wood structure 3a, 3b to be joined, arranging 24 the joining element 1 in the groove 5a, 5b of at least one wood structure to be joined, and joining 25 the wood structures 3a, 3b to one another with the joining surfaces 4a, 4b facing one another, such that the joining element 1 and the binding agent substantially fill the space up. Next, the method may comprise arranging 26 a joint pin 6 in each joint hole of the joining element 1 through at least one wood structure 3a, 3b to be joined in order to lock the wood structures in place with respect to one another. This enables a strong joint to be formed between the wood structures.

The joining element comprises a first curved part and a second curved part at mutually opposite ends. Similarly, each wood structure to be joined may be provided with a groove having a shape substantially in conformity with that of the first or the second curved part. This is particularly advantageous since it is possible to form such a groove by a suitable blade arrangeable in a tool readily available at an ordinary worksite, preferably a tool with a rotating blade, such as a circular hand saw or the like. Preferably, the grooves may then be formed as so-called insert embedding. This enables the wood structures to be joined at the construction site without any large machine tools and/or other special tools or necessary preceding factory work phases. A suitable blade may preferably be a blade which is particularly designed for the purpose and which enables a groove having a shape in accurate conformity with a segment of the joining element, for instance a half of the joining element, to be readily formed in the wood structure to be joined. On the other hand, the present joining element 1 and method for joining wood structures are naturally also highly suitable for use in factory work or similar industrial environment and/or in factory work phases associated with wood construction and wood structures.

In an embodiment, the binding agent may comprise a glue known per se and suitable for joining wood materials, particularly preferably a polyurethane glue. The glue enables the joining element and the wood structures to be joined to be bound immovably to one another. A polyurethane glue also expands in the joint, filling up a possible gap caused by dimensional tolerances between the joining element and the wood structures to be joined and binding the joining element and the wood structures to one another, thus forming a substantially uniform structure, which is particularly preferable as far as the strength of the joint is concerned.

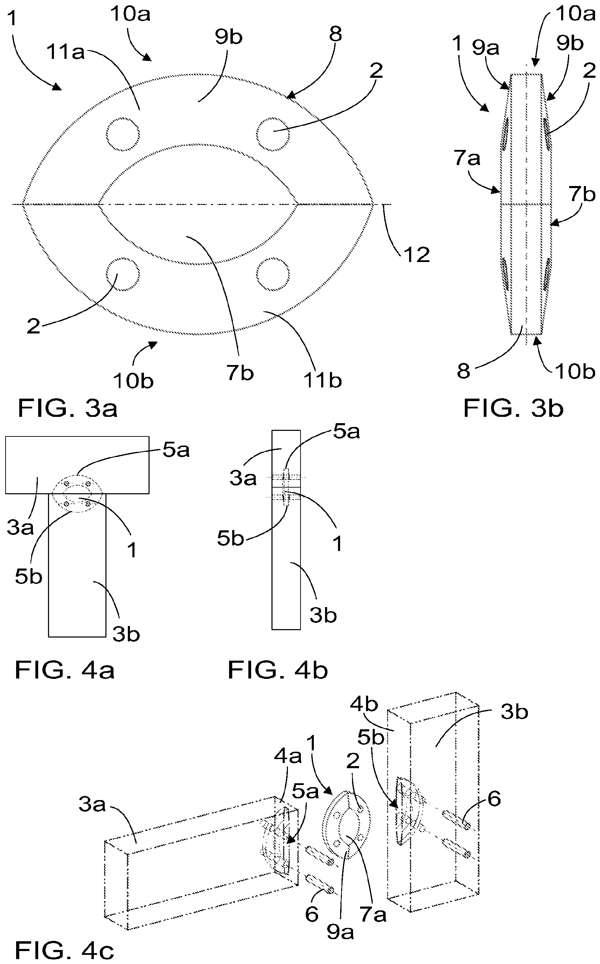

Figures 3a and 3b show a joining element for joining wood structures to one another. Figure 3a is a front view of the joining element 1 while Figure 3b is a side view of the joining element. The joining element then comprises at least two joint holes 2 for pin joints as well as a first plane surface 7a and a second plane surface 7b and an inclined surface 9a, 9b slanting towards the outer edge 8 of the joining element 1 and arranged at an angle with respect to at least one plane surface 7a, 7b. Thus, the joining element 1 is then at least at one of its outer edges or in one area of its outer edge in the direction of the joint holes 2 more tapered than in the area of the middle part of the joining element 1, as can be seen in Figure 3b in particular. Owing to such a wedge-like structure of the joining element, the joining element and the wood structures to be joined settle with respect to one another into an intended position in all three directions/dimensions and press tightly and substantially immovably into one another.

The first plane surface 7a and the second plane surface 7b are arranged on opposite sides of the joining element 1 and are mutually substantially parallel, as in the embodiment of Figures 3a and 3b. An advantage of this solution is that the joining element and the wood structures to be joined may be supported against one another substantially over the entire area of these plane surfaces, which adjusts the wood structures to be joined accurately into the desired position and makes the joint stronger.

The joining element comprises a first curved part 11a at a first end 10a of the joining element, and a second curved part 11b at a second end 10b of the joining element, which resides at an end opposite to the first end 10a of the joining element.

Upon joining the wood structures, the first end 10a thus settles in the groove 5a of the first wood structure 3a while the second end 10b settles in the groove 5b of the second wood structure 3b, the joining element thus settling in the space formed by these grooves 5a, 5b between the wood structures when the wood structures have been arranged against one another, as can also be seen in the figures. Preferably, the joining element 1 may be substantially symmetrical, i.e. the first end 10a and the second end 10b may be congruent in shape but antiparallel, in which case the grooves 5a, 5b may also have mutually substantially the same shape. In such a case, the joining element 1 may be arranged between the wood structures 3a, 3b to be joined such that a centre line 12 situated between the first end 10a and the second end 10b of the joining element 1 and designated in broken line in Figure 3a is arranged substantially parallel with the joining surfaces 4a, 4b of the wood structures 3a, 3b to be joined, i.e. the centre line 12 of the joining element 1 settles in the wood structure joint substantially parallelly with the joining line of the wood structures.

The joining element 1 is symmetrical in cross-section such that it comprises mutually substantially parallel first and second plane surfaces 7a, 7b as well as on both sides of the joining element, at least at the first and the second end 10a, 10b of the joining element, inclined surfaces 9a, 9b slanting from these plane surfaces towards the outer edge 8 of the joining element, the joining element being at the first end 10a and at the second end 10b in the direction of the joint holes more tapered than in the middle area of the joining element defined by the first and the second plane surface 7a, 7b.

In an embodiment, the joining element is formed from a wood material. This is preferable as far as both the uniform appearance to be achieved and also the uniform properties of the material are concerned. All components of the joint, i.e. the wood structures 3a, 3b to be joined and the joining element 1, are then provided with identical gluing properties, for instance, which is why, for instance, the same binding agent is suitable for all the components of the joint and forms a substantially equally strong joint therewith. Then, too, material alterations taking place due to the influence of heat and moisture, such as expansion, are substantially the same to all components of the joint. Particularly preferably the joining element may be formed from a cross-glued wood material, which is particularly strong under shear and torsional stress.

In an embodiment, the joint pin 6 may be formed from the same material as at least one of the wood structures to be joined. An advantage of this solution is that the wood structure joint looks as uniform as possible on the outside.

Figures 4a, 4b, and 4c schematically show a wood structure joint in which the first wood structure 3a and the second wood structure 3b are joined to one another by a joint structure comprising a joining element 1, grooves 5a, 5b arranged in the first and the second wood structure as well as joint pins 6 arranged in joint holes of the joining element. Figure 4a is a front view of the wood structure joint, Figure 4b is a side view thereof, and Figure 4c is an exploded view in perspective of the components of the wood structure joint. The joining element 1 may be according to any one of the embodiments of the joining element disclosed above. Preferably, in the joint structure, a binding agent may be arranged between the joining element and the wood structures to be joined to make the joint between the joining element and the groove provided in the wood structure stronger. This binding agent may preferably comprise for instance a glue known per se, particularly preferably a polyurethane glue.

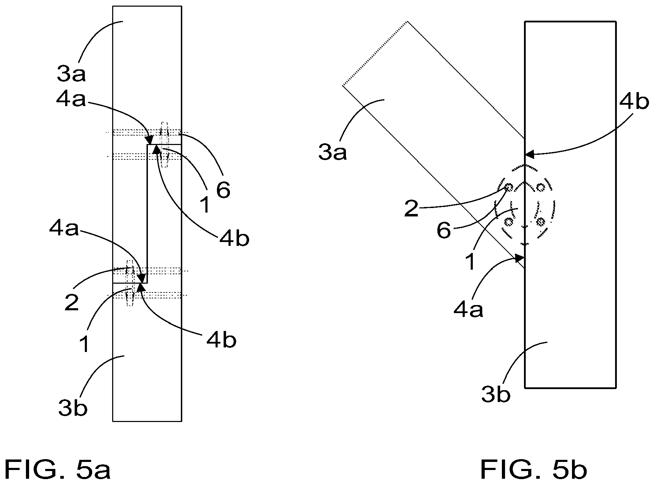

Figures 5a and 5b schematically show some other wood structure joints in which the first wood structure 3a and the second wood structure 3b are joined to one another by a joint structure comprising at least one joining element 1, at least one grooves 5a, 5b arranged in the first and the second wood structure, one groove in each wood structure 3a, 3b to be joined per each joining element 1 to be used in the joint structure, as well as joint pins 6 arranged in joint holes of the joining element. The structure may then also comprise a plurality of joining surfaces 4a, 4b.

In Figure 5a, for example, two wood structures 3a, 3b are joined to one another by a butt joint in which an end of both wood structures is shaped such that each wood structure is provided with two joining surfaces 4a, 4b of the presently disclosed kind, and each joining surface pair is joined by using one joining element and/or method according to those disclosed in the present description for joining wood structures. In Figure 5b, in turn, the wood structures 3a, 3b to be joined are joined at an angle with respect to one another and, again, one joining element and/or method according to those disclosed in the present description for joining wood structures may have been used in the joining. In still another embodiment, three or more wood structures 3a, 3b may be joined to one another by using one or more joining elements 1 and/or methods disclosed in the present description for joining wood structures.

In an embodiment, the binding agent may comprise a glue, preferably a polyurethane glue or a corresponding expanding glue, arranged in capsule form. In such a case, the binding agent may become activated only after influence is exerted on the capsule, for instance the surface of the capsule is broken, by an external object, for instance by the joining element 1 and/or the joint pin 6. In such a case, the binding agent capsule may be arranged between at least one wood structure 3a, 3b to be joined and the joining element 1, and the binding agent may be arranged to become activated and/or expand when the joining element is arranged in the space formed by the grooves 5a, 5b of the wood structures 3a, 3b to be joined and the wood structures 3a, 3b are arranged such that their joining surfaces 4a, 4b reside against one another, in which case the joining element 1 or the joint pin 6 may influence the binding agent capsule. The joining element 1 and/or the joint pin 6 may then serve as a piston, as it were, pushing the binding agent out of the capsule while the wood structures 3a, 3b and the joining element 1 press against one another.

It will be apparent to a person skilled in the art that as technology advances, the basic idea of the invention may be implemented in many different ways. The invention and its embodiments are thus not restricted to the examples described above but may vary within the scope of the claims.

## Claims

1. A method of joining wood structures (3a, 3b) to one another, the method comprising:
selecting (21) a joining element (1) comprising:
at least two joint holes (2) for pin joints,
a first plane surface (7a) and a second plane surface (7b), the first plane surface (7a) and the second plane surface (7b) being arranged on opposite sides of the joining element (1) in a mutually substantially parallel manner and arranged to define a middle area of the joining element, and
an inclined surface (9a, 9b) slanting towards an outer edge (8) of the joining element and arranged at an angle with respect to at least one said plane surface;
providing (22) a joining surface (4a, 4b) of each wood structure (3a, 3b) to be joined with a groove (5a, 5b) such that the joining element is arrangeable in a space formed by the grooves (5a, 5b) provided in the wood structures to be joined when the wood structures are placed against one another with the joining surfaces (4a, 4b) of the wood structures facing one another, and in that the space has substantially the same size and shape as the joining element;
arranging (23) a binding agent in the groove provided in at least one wood structure to be joined, arranging (24) the joining element in the groove of at least one wood structure to be joined, and joining (25) the wood structures to one another with the joining surfaces facing one another, such that the joining element and the binding agent substantially fill the space up; and
arranging (26) a joint pin (6) in each joint hole (2) of the joining element through at least one wood structure to be joined in order to lock the wood structures in place with respect to one another;
wherein the joining element comprises a first curved part (11a) and a second curved part (11b) at mutually opposite ends (10a, 10b), and the method further comprises arranging the groove to be formed in each wood structure to be joined to comprise a shape substantially in conformity with that of the first or the second curved part (11a, 11b).

2. A method as claimed in claim 1, wherein the binding agent comprises a polyurethane glue.

3. A method as claimed in claim 1 or 2, wherein the joining element (1) is formed from a wood material.

4. A method as claimed in claim 3, wherein the joining element (1) is formed from a cross-glued wood material.

5. A method as claimed in any one of claims 1 to 4, wherein the joint pin (6) is formed from the same material as at least one of the wood structures (3a, 3b) to be joined.

6. A joining element (1) for joining wood structures (3a, 3b) to one another, wherein the joining element (1) comprises:
at least two joint holes (2) for pin joints,
a first plane surface (7a) and a second plane surface (7b), the first plane surface (7a) and the second plane surface (7b) being arranged on opposite sides of the joining element in a mutually substantially parallel manner and arranged to define a middle area of the joining element, and
an inclined surface (9a, 9b) slanting towards an outer edge (8) of the joining element and arranged at an angle with respect to at least one said plane surface, such that the joining element is tapered at least at one of its outer edges (8) or in one area of its outer edge compared to the area of a middle part of the joining element, and
wherein the joining element comprises a first curved part (11a) at a first end (10a) of the joining element and a second curved (11b) part at a second end (10b), opposite to the first end (10a), of the joining element.

7. A joining element (1) as claimed in claim 6, wherein the joining element (1) is symmetrical in cross-section such that it comprises mutually substantially parallel first and second plane surfaces (7a, 7b) as well as on both sides of the joining element, at least at the first and the second end of the joining element, inclined surfaces (9a, 9b) slanting from these plane surfaces towards the outer edge (8) of the joining element, the joining element being at the first end and at the second end in the direction of the joint holes (2) narrower than in the middle area of the joining element defined by the first and the second plane surface (7a, 7b).

8. A joining element (1) as claimed in claim 6 or 7, wherein the joining element (1) is formed from a wood material.

9. A joining element (1) as claimed in claim 8, wherein the joining element (1) is formed from a cross-glued wood material.

10. A joint structure for joining wood structures (3a, 3b), comprising a joining element (1) according to any one of claims 6 to 9.

## Patentansprüche

1. Verfahren zum Miteinanderverbinden von Holzstrukturen (3a, 3b), wobei das Verfahren Folgendes umfasst:
Auswählen (21) eines Verbindungselements (1), das Folgendes umfasst:
mindestens zwei Verbindungslöcher (2) für Stiftverbinder,
eine erste ebene Fläche (7a) und eine zweite ebene Fläche (7b), wobei die erste ebene Fläche (7a) und die zweite ebene Fläche (7b) auf gegenüberliegenden Seiten des Verbindungselements (1) in einer gegenseitigen im Wesentlichen parallelen Weise angeordnet sind und angeordnet sind, einen mittleren Bereich des Verbindungselements zu definieren, und
eine geneigte Fläche (9a, 9b), die zu einer Außenkante (8) des Verbindungselements abfällt und mit Bezug auf mindestens eine ebene Fläche in einem Winkel angeordnet ist;
Versehen (22) einer Verbindungsfläche (4a, 4b) jeder zu verbindenden Holzstruktur (3a, 3b) mit einer Nut (5a, 5b), derart, dass das Verbindungselement in einem Raum, der durch die Nuten (5a, 5b) gebildet wird, die in den zu verbindenden Holzstrukturen vorgesehen sind, anordenbar ist, wenn die Holzstrukturen derart gegeneinander platziert werden, dass die Verbindungsflächen (4a, 4b) einander zugewandt sind, und dadurch, dass der Raum im Wesentlichen dieselbe Größe und Form wie das Verbindungselement aufweist;
Anordnen (23) eines Bindemittels in der Nut, die in mindestens einer zu verbindenden Holzstruktur vorgesehen ist, Anordnen (24) des Verbindungselements in der Nut von mindestens einer zu verbindenden Holzstruktur und Miteinanderverbinden (25) der Holzstrukturen derart, dass die Verbindungsflächen einander zugewandt sind, derart, dass das Verbindungselement und das Bindemittel im Wesentlichen den Raum ausfüllen; und
Anordnen (26) eines Verbindungsstifts (6) in jedem Verbindungsloch (2) des Verbindungselements durch mindestens eine zu verbindende Holzstruktur, um die Holzstrukturen mit Bezug aufeinander zu verriegeln;
wobei das Verbindungselement an gegenseitig gegenüberliegenden Enden (10a, 10b) einen ersten gekrümmten Teil (11a) und einen zweiten gekrümmten Teil (11b) umfasst und das Verfahren ferner das Anordnen der in jeder zu verbindenden Holzstruktur zu bildenden Nut, derart, dass sie eine Form umfasst, die im Wesentlichen mit der des ersten oder des zweiten gekrümmten Teils (11a, 11b) konform ist, umfasst.

2. Verfahren nach Anspruch 1, wobei das Bindemittel einen Polyurethanleim umfasst.

3. Verfahren nach Anspruch 1 oder 2, wobei das Verbindungselement (1) aus einem Holzmaterial gebildet ist.

4. Verfahren nach Anspruch 3, wobei das Verbindungselement (1) aus einem kreuzverleimten Holzmaterial gebildet ist.

5. Verfahren nach einem der Ansprüche 1 bis 4, wobei der Verbindungsstift (6) aus demselben Material gebildet ist wie mindestens eine der zu verbindenden Holzstrukturen (3a, 3b) .

6. Verbindungselement (1) zum Miteinanderverbinden von Holzstrukturen (3a, 3b), wobei das Verbindungselement (1) Folgendes umfasst:
mindestens zwei Verbindungslöcher (2) für Stiftverbinder,
eine erste ebene Fläche (7a) und eine zweite ebene Fläche (7b), wobei die erste ebene Fläche (7a) und die zweite ebene Fläche (7b) auf gegenüberliegenden Seiten des Verbindungselements in einer gegenseitigen im Wesentlichen parallelen Weise angeordnet sind und angeordnet sind, einen mittleren Bereich des Verbindungselements zu definieren, und
eine geneigte Fläche (9a, 9b), die zu einer Außenkante (8) des Verbindungselements abfällt und mit Bezug auf mindestens eine ebene Fläche in einem Winkel angeordnet ist, derart, dass das Verbindungselement an mindestens einer seiner Außenkanten (8) oder in einem Bereich seiner Außenkante, verglichen mit dem Bereich eines mittleren Teils des Verbindungselements, konisch ist, und
wobei das Verbindungselement an einem ersten Ende (10a) des Verbindungselements einen ersten gekrümmten Teil (11a) und an einem zweiten Ende (10b), das dem ersten Ende (10a) gegenüberliegt, des Verbindungselements ein zweites gekrümmtes Ende (11b) umfasst.

7. Verbindungselement (1) nach Anspruch 6, wobei das Verbindungselement (1) im Querschnitt symmetrisch ist, derart, dass es eine gegenseitig im Wesentlichen parallele erste und zweite ebene Fläche (7a, 7b) sowie auf beiden Seiten des Verbindungselements, mindestens am ersten und am zweiten Ende des Verbindungselements, geneigte Flächen (9a, 9b), die von diesen ebenen Flächen zur Außenkante (8) des Verbindungselements abfallen, umfasst, wobei das Verbindungselement am ersten Ende und am zweiten Ende in Richtung der Verbindungslöcher (2) schmaler ist als im mittleren Bereich des Verbindungselements, der von der ersten und der zweiten ebenen Fläche (7a, 7b) gebildet wird.

8. Verbindungselement (1) nach Anspruch 6 oder 7, wobei das Verbindungselement (1) aus einem Holzmaterial gebildet ist.

9. Verbindungselement (1) nach Anspruch 8, wobei das Verbindungselement (1) aus einem kreuzverleimten Holzmaterial gebildet ist.

10. Verbindungsstruktur zum Verbinden von Holzstrukturen (3a, 3b), die ein Verbindungselement (1) gemäß einem der Ansprüche 6 bis 9 umfasst.

## Revendications

1. Procédé pour relier des structures en bois (3a, 3b) entre elles, le procédé comprenant les étapes suivantes :
sélectionner (21) un élément de liaison (1) comprenant :
au moins deux trous de joint (2) pour des joints à broche,
une première surface plane (7a) et une seconde surface plane (7b), la première surface plane (7a) et la seconde surface plane (7b) étant agencées sur des côtés opposés de l'élément de liaison (1) d'une manière mutuellement sensiblement parallèle et agencés afin de définir une zone centrale de l'élément de liaison, et
une surface inclinée (9a, 9b) s'inclinant vers un bord externe (8) de l'élément de liaison et agencée à un angle par rapport à au moins l'une desdites surfaces planes ;
prévoir (22) une surface de liaison (4a, 4b) de chaque structure en bois (3a, 3b) pour être reliée avec une rainure (5a, 5b) de sorte que l'élément de liaison peut être agencé dans un espace formé par les rainures (5a, 5b) prévues dans les structure en bois à relier lorsque les structures en bois sont placées les unes contre les autres avec les surfaces de liaison (4a, 4b) des structure en bois qui se font face, et en ce que l'espace a sensiblement la même taille et la même forme que l'élément de liaison ;
agencer (23) un agent liant dans la rainure prévue dans au moins une structure en bois à relier, agencer (24) l'élément de liaison dans la rainure d'au moins une structure en bois à relier, et relier (25) les structures en bois entre elles avec les surfaces de liaison que se font face, de sorte que l'élément de liaison et l'agent liant remplissent sensiblement l'espace ; et
agencer (26) une broche de joint (6) dans chaque trou de joint (2) de l'élément de liaison à travers au moins une structure en bois à relier afin de bloquer les structures en bois en place les unes par rapport aux autres ;
dans lequel l'élément de liaison comprend une première partie incurvée (11a) et une seconde partie incurvée (11b) à des extrémités mutuellement opposées (10a, 10b), et le procédé comprend en outre l'étape pour agencer la rainure à former dans chaque structure en bois à relier pour comprendre une forme sensiblement en conformité avec celle de la première ou de la seconde partie incurvée (11a, 11b).

2. Procédé selon la revendication 1, dans lequel l'agent liant comprend une colle à base de polyuréthane.

3. Procédé selon la revendication 1 ou 2, dans lequel l'élément de liaison (1) est formé à partir d'un matériau en bois.

4. Procédé selon la revendication 3, dans lequel l'élément de liaison (1) est formé à partir d'un matériau en bois lamellé - collé.

5. Procédé selon l'une quelconque des revendications 1 à 4, dans lequel la broche de joint (6) est formée à partir du même matériau qu'au moins l'une des structures en bois (3a, 3b) à relier.

6. Elément de liaison (1) pour relier des structures en bois (3a, 3b) entre elles, dans lequel l'élément de liaison (1) comprend :
au moins deux trous de joint (2) pour des joints à broche,
une première surface plane (7a) et une seconde surface plane (7b), la première surface plane (7a) et la seconde surface plane (7b) étant agencées sur des côtés opposés de l'élément de liaison d'une manière mutuellement sensiblement parallèle et agencées afin de définir une zone centrale de l'élément de liaison, et
une surface inclinée (9a, 9b) s'inclinant vers un bord externe (8) de l'élément de liaison et agencée à un angle par rapport à au moins l'une desdites surfaces planes, de sorte que l'élément de liaison est progressivement rétréci au moins au niveau de l'un de ses bords externes (8) ou dans une zone de son bord externe par rapport à la zone d'une partie centrale de l'élément de liaison, et
dans lequel l'élément de liaison comprend une première partie incurvée (11a) au niveau d'une première extrémité (10a) de l'élément de liaison et une seconde partie incurvée (11b) au niveau d'une seconde extrémité (10b) opposée à la première extrémité (10a) de l'élément de liaison.

7. Elément de liaison (1) selon la revendication 6, dans lequel l'élément de liaison (1) est symétrique en coupe de sorte qu'il comprend des première et seconde surfaces planes (7a, 7b) mutuellement sensiblement parallèles ainsi que des deux côtés de l'élément de liaison, au moins au niveau de la première et de la seconde extrémité de l'élément de liaison, des surfaces inclinées (9a, 9b) s'inclinant à partir de ces surfaces planes vers le bord externe (8) de l'élément de liaison, l'élément de liaison étant au niveau de la première extrémité et au niveau de la seconde extrémité, dans la direction des trous de joint (2) plus étroits que dans la zone centrale de l'élément de liaison définie par la première et la seconde surface plane (7a, 7b).

8. Elément de liaison (1) selon la revendication 6 ou 7, dans lequel l'élément de liaison (1) est formé à partir d'un matériau en bois.

9. Elément de liaison (1) selon la revendication 8, dans lequel l'élément de liaison (1) est formé à partir d'un matériau en bois lamellé - collé.

10. Structure de joint pour relier des structures en bois (3a, 3b) comprenant un élément de liaison (1) selon l'une quelconque des revendications 6 à 9.
